(19) **Europäisches Patentamt / European Patent Office / Office européen des brevets**

(11) **EP 1 400 082 B1**

(12) **EUROPEAN PATENT SPECIFICATION**

(45) Date of publication and mention
of the grant of the patent:
**25.04.2007 Bulletin 2007/17**

(21) Application number: **02740922.6**

(22) Date of filing: **28.06.2002**

(51) Int Cl.:
***H04L 27/18*** *(2006.01)*

(86) International application number:
**PCT/GB2002/002979**

(87) International publication number:
**WO 2003/003684 (09.01.2003 Gazette 2003/02)**

(54) **MODULATION SCHEME FOR TETRA SYSTEMS**

MODULATIONSSCHEMA FÜR TETRA-SYSTEME

SCHEMA DE MODULATION POUR DES SYSTEMES TETRA

(84) Designated Contracting States:
**AT BE CH CY DE DK ES FI FR GR IE IT LI LU MC NL PT SE TR**

(30) Priority: **29.06.2001 GB 0116017**

(43) Date of publication of application:
**24.03.2004 Bulletin 2004/13**

(60) Divisional application:
**04013415.7 / 1 453 266**

(73) Proprietor: **Sepura Limited
Cambridge CB4 1GR (GB)**

(72) Inventor: **STEPHENS, Peter, William
Ely,
Cambridgeshire CB6 1AP (GB)**

(74) Representative: **Tothill, John Paul
Frank B. Dehn & Co.
St Bride's House
10 Salisbury Square
London EC4Y 8JD (GB)**

(56) References cited:
**WO-A-00/39974          US-A- 6 014 375**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to communications systems, and in particular to modulation methods used in mobile communications systems.

Modern digital mobile communications systems such as TETRA (TErrestrial Trunked RAdio) often consist of a cellular arrangement of base stations across a geographic area. Mobile units operate within the cells in conjunction with the base stations of the system using one of a number of available frequency channels to carry signalling and traffic. The location of the base sites (stations) and the frequencies available for operation are usually agreed with regulatory authorities when a communications system is deployed.

It can be the case that over a period of time enhancements to a communications system may be desirable. This could be, for example, for reasons of system capacity (e.g. because the number of users wishing to use the system has increased), or because communications applications requiring higher data rates need to be supported by the system.

While there-are often technical advances in communication system design which can help to satisfy such new requirements, it can be expensive to replace existing equipment in an existing communications network with new equipment of higher performance. It is often also difficult (and/or expensive) to obtain new frequencies and base sites to enhance an existing communications system.

Generally speaking therefore when looking to upgrade an existing communications system, it would be desirable for the upgrade to require no new frequencies, no new base sites and minimal new equipment investment.

Furthermore, where an existing communications system using an existing communications standard is in place, it would also be desirable for any enhancement to the system to be compatible with the existing communications standard (e.g. in terms of its transmission format and structure).

For example, with regard to the TETRA system, it would be desirable for any system enhancement to still use the original TETRA (TETRA 1) slot and frame structure (i.e. four timeslots per frame, eighteen frames per multi-frame, etc.) and the 25 kHz channel separation used by standard TETRA.

The Applicants are aware of a desire to be able to provide greater data transmission rates in existing TETRA communications systems. One way that this could be achieved would be to use an increased bit rate capacity modulation scheme.

The existing TETRA Standard uses $\pi/4$ differential phase shift keying (DQPSK) modulation, which encodes two bits per modulation symbol, is differentially encoded, and provides a 36 kbps raw bit rate. Higher raw bit rates could be achieved by using different modulation schemes. However, the Applicants believe that higher level modulation schemes such 16-QAM, 32-QAM, 16 PSK, etc., would require a relatively significant change from current TETRA equipment in terms of transceiver design.

Furthermore, the Applicants believe that in the mobile communications environment, such high levels of modulation as would be provided by these modulation techniques may not be very efficient as they may require very high carrier to interference and signal to noise ratios.

WO 00/39974 describes the use of a 8-phase shift keying modulation in a communication system that uses an 8-level modulator for both 8-level and 4-level modulation signalling. US-A-6014375 describes a narrowband channel air interface protocol for use with TETRA communications systems.

According to a first aspect of the present invention, there is provided a method of operating a TETRA mobile communications system, characterised by comprising:

using a $\pi/8$ shifted differential 8-phase shift keying modulation scheme, which encodes 3 bits per symbol and has a $\pi/8$ phase rotation each symbol interval, for transmissions in the system.

According to a second aspect of the present invention, there is provided an apparatus for a communications station of a TETRA mobile communications system, the apparatus being characterised by comprising:

means for causing a TETRA communications station to make transmissions using $\pi/8$ shifted differential 8-phase shift keying modulation scheme, which encodes 3 bits per symbol and has a $\pi/8$ phase rotation each symbol interval.

The present invention proposes a higher level modulation scheme for use in a TETRA system which encodes 3 bits per modulation symbol. This means that the modulation level is not so high as to incur the problems outlined above.

Furthermore, as the modulation scheme of the present invention uses differential phase shift-keying it has many similarities to the existing TETRA $\pi/4$ DQPSK modulation scheme. This means that the changes necessary to existing TETRA equipment for it to be able to use the new modulation scheme are very much reduced.

For example, only minor changes to the TETRA modulator can allow switching between existing TETRA $\pi/4$ DQPSK modulation and the modulation scheme of the present invention. Similarly, the demodulator for the modulation scheme of the present invention is effectively the same as for existing TETRA, except for the need for the addition of a symbol demapper.

The modulation scheme of the present invention can also use, and preferably does use, the same symbol rate, RRC filter and channel spacing, as for existing TETRA systems. This means that, for example, the existing TETRA slot and frame structure can be preserved, and existing TETRA π/4 DQPSK signalling and traffic can still be present in the system (with the higher level modulation being employed, for example, only for packet data transmissions).

Thus the modulation scheme of the present invention can be used to upgrade an existing TETRA system in a way which requires no new frequencies and no new base sites and requires relatively minimal new equipment investment. In addition, the invention can be employed in green field TETRA systems to enhance the basic TETRA system capability. For example, with the modulation scheme of the present invention, where the same symbol rate of 18000 symbols/s as in existing TETRA is used, the resulting raw bit rate will be 54000 bits/s (an increase of 50% on existing TETRA n/4 DQPSK modulation).

The modulation scheme used in the present invention is n/8 shifted differential 8-phase shift keying, which encodes 3 bits per symbol and has a n/8 phase rotation each symbol interval. Such a modulation scheme is similar to the known 8-phase shift keying modulation, but the modulation in the present invention is carried out differentially.

This modulation scheme preferably uses a Gray code mapping, in which each consecutive set of 3 bits is used to represent a phase change of $^+/-$ n/8, $^+/-$ 3π/8, $^+/-$ 5n/8 and $^+/-$ 7n/8, and which can be represented by:

$$S(k) = S(k-1)\exp[jD\Phi(k)]$$

$$S(0) = 1$$

where: S(k) is the kth symbol in the burst, k=1,
2, ..., n and n is the total number of symbols in a burst.

When using this modulation scheme, the phase change between consecutive symbols is preferably related to the modulation bits as follows:

| B(3k-2) | B(3k-1) | B (3k) | DΦ (k) |
|---------|---------|--------|--------|
| 0 | 0 | 0 | +π/8 |
| 0 | 0 | 1 | +3π/8 |
| 1 | 0 | 1 | +5π/8 |
| 1 | 0 | 0 | +7π/8 |
| 0 | 1 | 0 | -π/8 |
| 0 | 1 | 1 | -3π/8 |
| 1 | 1 | 1 | -5π/8 |
| 1 | 1 | 0 | -7π/8 |

for k = 1, 2, ..., n.

The modulation scheme of the present invention, particularly in its preferred embodiments, while allowing an increased raw bit rate for the same symbol rate, has many similarities to the existing n/4 DQPSK modulation scheme already used by TETRA. This means that, as discussed above, the modifications necessary to allow an existing TETRA radio supporting π/4 DQPSK modulation to use this modulation are reduced, therefore facilitating, for example, an upgrade to the higher performance modulation scheme with reduced development cost, and potentially the possibility of software-only upgrades of existing equipment.

The new modulation scheme proposed by the present invention can be used directly in existing TETRA channels and with the existing TETRA 1 slot and frame structure, etc., and preferably is so used.

In a particularly preferred embodiment, it is envisaged that TETRA systems will use the modulation scheme of the present invention together with the existing n/4 DQPSK TETRA modulation. In other words channels modulated with the two modulation schemes will co-exist in the system. Such an arrangement will then support standard TETRA equipment and the enhanced TETRA equipment of the present invention at the same time, thus maintaining compatibility between the old and new system (and equipment). Such a system preferably uses the normal 25 kHz TETRA channels for both modulation formats, for the same reason.

In such an arrangement it is preferred that signalling on a n/4-DQPSK modulated channel is used to indicate the availability of the higher modulation rate channels, as appropriate.

It is preferred in the above arrangements and embodiments, and when using the new modulation scheme of the present invention, to use the synchronisation techniques currently employed by existing TETRA as far as possible, although this is not essential. Thus, for initial synchronisation, the synchronisation bursts which provide the mechanism for initial synchronisation and frequency lock preferably remain unchanged and use π/4 DQPSK modulation.

Frame synchronisation for the increased bit rate modulation scheme is preferably achieved using an embedded training sequence, in a similar way to existing TETRA, but with the training sequence using the higher level modulation technique.

Symbol synchronisation (sampling instant) is preferably achieved using existing TETRA techniques. This is possible where the symbol rate is the same because the modulation characteristics are similar.

The demodulation techniques used for the new modulation method can also be selected as desired. Because the π/8 shifted differential 8PSK modulation method is similar to π/4 DQPSK modulation, it is strongly preferred to use the existing TETRA demodulation techniques as far as possible.

Changes that may be necessary to the demodulator for the enhanced data rate modulation scheme of the present invention include an additional or modified step of symbol de-mapping (compared to the π/4 DQPSK demodulator) to map the differentially detected symbols onto bits, with 3 bits per symbol. Furthermore, if the frame synchronisation algorithm for packet data bursts is carried out by complex correlation, then it should be adapted from π/4 DQPSK to the new modulation scheme. (If the frame synchronisation algorithm is carried out post-differential detection, then no change is needed other than possibly adjustments to the length and position of the training sequence in the burst.) Finally, the burst demultiplexer (burst to logical channel conversion) may need to be adjusted to handle the new burst format for the new modulation scheme (with its larger number of bits in the packet data logical channel).

The present invention also extends to a TETRA communications station (which could be a base or mobile station as is known in the art) that can use the modulation schemes of the present invention.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program comprising computer software code portions for performing the methods hereinabove described when the program is run on data processing means. The invention also extends to a computer software carrier comprising such software which when used to operate a communications system and a communications station comprising data processing means causes in conjunction with said data processing means said system or station to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

A number of preferred embodiments of the present invention will now be described by way of example only and with reference to the accompanying drawings, in which:

Figure 1 shows the symbol constellation diagram for a preferred embodiment of the modulation scheme of the present invention;
Figure 2 illustrates how standard TETRA modulator/transmitter and receiver/demodulator architecture may be enhanced to support the modulation scheme of Figure 1;
Figure 3 shows a preferred embodiment of TETRA burst structures when using the modulation scheme of Figure 1; and
Figure 4 shows a preferred embodiment of the error control structure to be used for a TETRA logical channel when using the modulation scheme of Figure 1.

The present invention proposes a new modulation scheme for use in TETRA mobile communications systems that can provide an enhanced data transmission rate.

The present invention will be described with reference to a TETRA system in which standard n/4-DQPSK modulated TETRA channels and TETRA channels using an enhanced data rate modulation scheme in accordance with the present invention co-exist. The system uses normal TETRA 25 kHz TETRA channels for both modulation formats. Thus both sets of channels use the standard TETRA timeslot and frame structure and symbol rate. Signalling is provided on a n/4-DQPSK modulated channel to indicate the availability of the higher data rate modulated channels as appropriate.

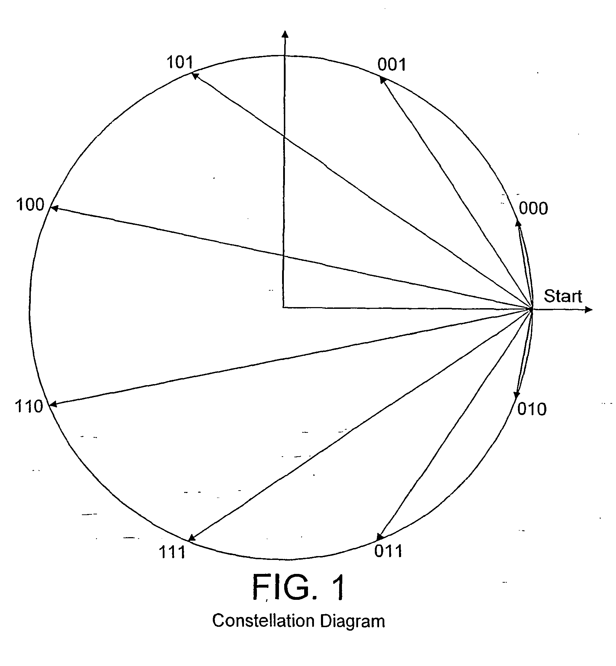

Figure 1 is the symbol constellation diagram for a preferred embodiment of an enhanced data modulation scheme in accordance with the present invention for use in TETRA. It shows each of the 8 allowed phase changes between consecutive symbols (as discussed below, 3 bits per symbol are used with Gray encoding).

The modulation scheme shown in Figure 1 uses n/8 shifted differential 8-phase shift keying, which encodes 3 bits per symbol. The modulation scheme uses a Gray code mapping in which each consecutive set of 3 bits is used to represent a phase change of $^+/_-$ n/8, $^+/_-$ 3n/8, $^+/_-$ 5n/8, and $^+/_-$ 7n/8. The modulation scheme can be represented by:

$$S(k) = S(k-1)\exp[jD\Phi(k)]$$

$$S(0) = 1$$

where: S(k) is the kth symbol in the burst, k=1, 2, ..., n, and n is the total number of symbols in the burst.

In this embodiment, the phase change between consecutive symbols is related to the modulation bits as follows:

| B (3k-2) | B(3k-1) | B (3k) | D$\Phi$(k) |
|---|---|---|---|
| 0 | 0 | 0 | +$\pi$/8 |
| 0 | 0 | 1 | +3$\pi$/8 |
| 1 | 0 | 1 | +5$\pi$/8 |
| 1 | 0 | 0 | +7$\pi$/8 |
| 0 | 1 | 0 | -$\pi$/8 |
| 0 | 1 | 1 | -3$\pi$/8 |
| 1 | 1 | 1 | -5$\pi$/8 |
| 1 | 1 | 0 | -7$\pi$/8 |

for k = 1, 2, ..., n.

As discussed above, in this preferred embodiment, this modulation scheme is used in standard TETRA channels (e.g. spacing, slot and frame structure) and at the standard TETRA symbol rate. This means that there are 18000 symbols/s as in existing TETRA, but the new modulation scheme provides an enhanced raw bit rate of 54000 bits/s (3 bits per symbol).

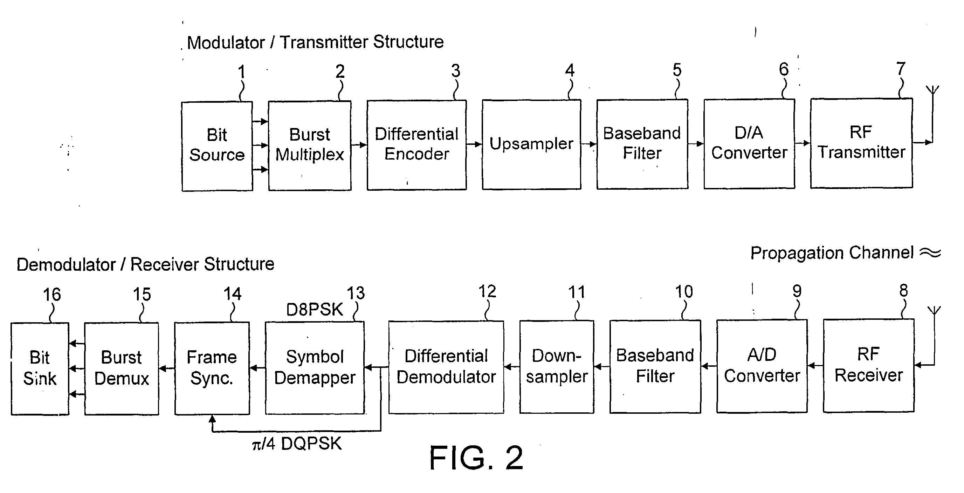

Figure 2 illustrates how a standard TETRA modulator/transmitter and demodulator/receiver architecture can be modified to support this higher level modulation scheme together with existing TETRA n/4 DQPSK modulation.

As shown in Figure 2, at the transmitter (modulator), a bit source 1 provides bits in "logical channels" for transmission. A burst multiplexer 2 then arranges the bits along with training sequences in a particular format known as a burst. A differential encoder 3 then encodes the bits into complex samples (I, Q), and the up-sampler 4 converts the sample rate from one sample to four samples per symbol for the base band filter 5. The digital-to-analogue converter 6 converts the digital signal to an analogue signal for the radio frequency (RF) transmitter stage 7, which up-converts the base band signal to the final RF carrier frequency and transmits the burst.

The main changes in the transmitter between the architecture for the existing TETRA n/4 DQPSK modulation and the enhanced data rate modulation scheme of the present embodiment are a change to the modulator to produce the enhanced data rate modulation using 3 bits per symbol, and a change to the burst multiplexer 2 to format the modified burst structure (see below) carrying the larger number of bits in each logical channel.

The corresponding receiver/demodulator architecture is also shown in Figure 2. At the receiver, the RF receiver 8 down-converts the RF signal to base band and the analogue-to-digital converter 9 converts the analogue base band signal to digital for digital processing. The A/D converter 9 typically provides four complex samples per symbol. A base band filter 10 applies additional filtering to remove any adjacent channel signals and noise from the digital signal. The filtered signal is then provided to a down sampler 11 which selects the optimum sampling instant for each symbol received and down samples to one complex sample per symbol.

The received signals are then differentially demodulated in the differential demodulator 12 to convert them to complex valued (I, Q) pairs representing bits. A symbol demapper 13 then converts the (I, Q) representation into bits. In the case of n/4 DQPSK modulation this is a 1:1 mapping with I and Q each representing a soft or hard bit. In the case of the new enhanced data rate modulation scheme of the present embodiment, I, Q and the value of |I| - |Q| represent 3 bits.

A frame synchroniser 14 then identifies the transmission burst edges by utilising a training sequence in the burst, and the burst demultiplexer 15 splits the received transmission burst into logical channels for a bit sink 16.

A preferred embodiment of the operation of a receiver/demodulator that can be used in the present embodiment will now be described.

The receiver must first be able to synchronise to the transmitted signal. In the present embodiment, synchronisation is achieved as far as possible according to the techniques currently employed in existing TETRA.

Thus, for initial synchronisation, the synchronisation bursts that provide the mechanism for initial synchronisation and frequency lock are the same as used in existing TETRA and use n/4 DQPSK modulation. Frame synchronisation for a n/4 DQPSK modulated transmission is also the same as in existing TETRA. For the enhanced data rate modulation scheme, frame synchronisation is achieved through an embedded training sequence in a similar way to existing TETRA, but the training sequence is modulated using the enhanced data rate modulation scheme. Finally, for both modulation schemes, symbol synchronisation (sampling instant) is achieved using existing TETRA techniques, as for both modulation schemes the symbol rate is the same and their modulation characteristics are similar.

Once the signal has been received, it is then necessary to demodulate it. For n/4 DQPSK modulated signals, such demodulation can take place as in existing TETRA. For the enhanced data rate modulation scheme, the demodulation technique is very similar to that for the $\pi/4$ DQPSK system because of the similarities between the modulation schemes. However, there are some differences.

The main difference is the need for an additional or modified step of symbol-demapping compared to the n/4 DQPSK demodulator. This is shown by the addition of the symbol demapper 13 in Figure 2. This symbol demapper converts the complex base band IQ symbols (the differentially detected symbols) to bits, with 3 bits per symbol.

The burst demultiplexer (burst logical channel conversion) 15 must also be modified to handle the new burst format for the enhanced level modulation scheme and in particular the larger number of bits in the packet data logical channel compared to $\Pi/4$ - DQPSK modulation.

Finally, it may be necessary to adapt the frame synchronisation algorithm for the packet data bursts if frame synchronisation is carried out by complex correlation. On the other hand if frame synchronisation is carried out post-differential detection, then no change may be needed other than adjustments to the length and position of the training sequence in the burst.

The same RRC filters and symbol rate as used for the existing n/4 DQPSK modulation scheme are used for the enhanced data rate modulation scheme of the present embodiment. It is also anticipated that no dedicated guard band would be needed for single carrier modulation using the enhanced data rate modulation scheme.

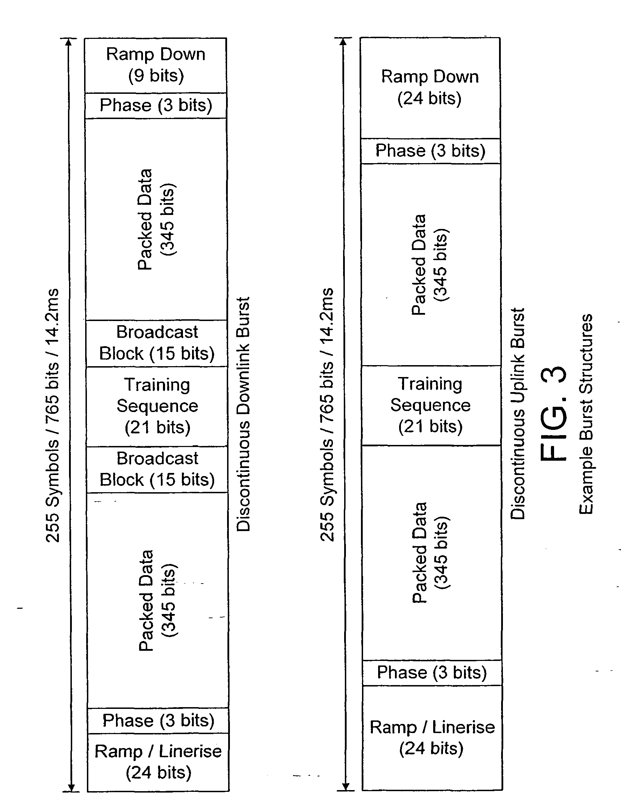

As the enhanced data rate modulation scheme of the present embodiment increases the number of bits that can be transmitted in a given time period, it is desirable to modify the TETRA burst structure when using the enhanced data rate modulation scheme to account for this. Figure 3 shows a preferred embodiment of the discontinuous downlink and uplink burst structures to be used when using the enhanced data rate modulation scheme. These burst structures have been designed for the purpose of carrying packet data, and maximise the data payload, but can also be used for carrying signalling information or circuit mode data. They use the same training sequence definition as for existing TETRA (but truncated by 1 bit), and the same broadcast block. Other burst structures would be possible, if desired.

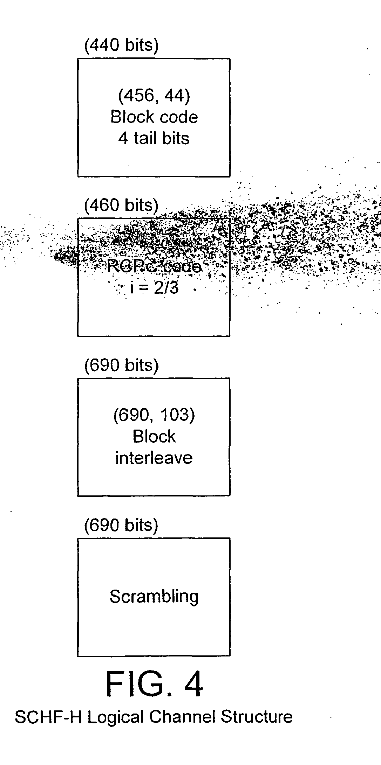

It is also necessary to channel code the data bits transmitted in the enhanced data rate modulation scheme transmission bursts. In the present embodiment, channel coding based around that available in existing TETRA (Reed-Muller for the AACH logical channel and rate compatible punctured code (RCPC) for the packet data channel) is used, so as to try to ensure minimal changes between the enhanced data rate modulation scheme and existing TETRA. Thus in a preferred embodiment a rate 2/3 RCPC coding is employed, as used on the existing TETRA SCH/F logical channel. Figure 4 shows the proposed error control structure for this type of logical channel when using the enhanced data rate modulation scheme embodiment. Other channel coding techniques could be used, if desired.

One consequence of using the channel coding structure shown in Figure 4 is that the structure introduces a channel size which exceeds the maximum currently supported by existing TETRA (432 bits), which may introduce problems for encryption and Viterbi decoders. One way to avoid this problem (if present) would be to split the logical channel into two halves, and encode each half separately.

It can be seen from the above that the necessary transmitter and receiver architecture changes to use the enhanced data rate modulation scheme of the present embodiment (and invention) are comparatively small, although some changes are necessary. The main change and increase in complexity lies in the need to handle larger blocks of bits in the modulator and demodulator. The complexity of those parts of the transmitter and receiver which handle bits can therefore be expected to scale linearly when compared to existing TETRA.

For example, the scrambler at the last step of the channel coding is normally applied to a block of bits of length 432 bits in a burst in existing TETRA. This would increase to a block length of 690 bits for the burst structure of the enhanced data rate modulation scheme of the present embodiment, an increase in complexity of 690/432 or 1.6. Other elements of the channel coding/decoding will also increase in complexity in this way.

However, this level of increase is relatively minimal, and in any event such an increase will always be necessary for any high-speed data scheme which processes a greater number of bits per transmission burst. It should also be noted that a significant advantage of the present embodiment is that there is no increase in complexity in the complex symbol domain (since the transmitter and receiver process the same number of symbols per burst as in existing TETRA).

There will also be additional memory requirements for the enhanced data rate modulation scheme, again primarily resulting in the need to handle more bits per transmission burst. The increase in memory size is likely to be of the order of 50% for some buffers. There will also be a small increase in the modulator memory size, which will need a look-up table of 16 values to define the constellation points for the enhanced data rate modulation scheme of the present embodiment (whereas only 8 values are needed for n/4 DQPSK modulation). A new training sequence for the enhanced data rate modulation scheme frame synchronisation will also need to be stored, as will a small amount of new code for the symbol demapper in the receiver. Overall though, the Applicants again believe that these additional memory requirements are relatively minimal.

The Applicants have performed simulations of the enhanced data rate scheme of the present embodiment to compare its performance with existing TETRA using n/4 DQPSK modulation. The simulations were carried out using the COSSAP simulation tool and the Applicant's own TETRA simulation suite. The standard TETRA TU50 and static propagation channel models were used, using the discontinuous downlink burst shown in Figure 3. A non-coherent detection scheme was used with the receiver modelled in a fixed point arithmetic post the A/D converters. The receiver chain included models of the AGC, AFC, symbol and frame synchronisation steps in addition to the demodulator itself. The simulations did not introduce any DC or frequency offsets into the received signal. However, it is believed that the inclusion of these artefacts would not have affected the results significantly.

Simulation results for the system at a carrier frequency of 400 MHz for a subset of the possible combinations of burst type, propagation condition and measurement were produced. Errors and any results were given in terms of Es/No to allow direct comparison with results from existing TETRA (i.e. equivalent symbol energy). (The results thus appeared 1.8 dB more pessimistic than the equivalent Eb/No figures.)

The simulation was first used to measure the peak:mean ratio. This was done using two methods, simulation and via test equipment. Both measurements gave figures which were approximately 0.5 dB higher for the enhanced data rate modulation scheme compared to $\Pi/4$ DQPSK modulation. Thus the peak:mean ratio is not significantly worse than for existing TETRA modulation and the same transmitter can be used as for existing TETRA. The Applicants also believe that the linearity requirements of 4 dB peak:mean ratio for the enhanced data rate modulation scheme of the present embodiment are not significantly different from n/4 DQPSK modulation.

Sensitivity measurements were then performed using the simulation for a number of different channel types.

First of all the unprotected static channel bit error rate was considered, comparing existing TETRA n/4 DQPSK modulation with the enhanced data rate modulation scheme of the present embodiment. The channel simulated was the TCH 7.2/TCH 11.5 channel (n/4 DQPSK modulation channel and enhanced data rate modulation equivalent channel). A difference of approximately 6.5 dB at bit error rate $10^{-5}$ in Es/No (or 4.7 dB in Eb/No) was found.

The same analysis was carried out for uncoded bit error rate versus Es/No in an unprotected TU 50 TETRA channel, with the same simulated logical channels. The difference between the n/4 DQPSK and the enhanced data rate modulation scheme was found to be approximately 4 dB at the 2% bit error rate level.

Further simulations were carried out for protected channels in static and TU 50 propagation channel conditions. The forward error protection used was based on the existing TETRA forward error correction. Thus Reed-Muller (30, 14) block code was used for the AACH logical channel and RCPC convolutional code was used for traffic and signalling channels. The Reed-Muller code was hard decision decoded in single error-correcting mode. When using the RCPC code for the enhanced data rate modulation scheme, the logical channel length was adjusted to suit the new burst type for the modulation scheme and the code was punctured to a basic rate of 2/3.

These simulations were carried out for the AACH logical channel, and the SCHF-H logical channel, under protected static channel and protected TU 50 propagation channel conditions, using the same channel coding. The sensitivity margin required for each logical channel to achieve a bit error rate to message error rate ratio (BER/MER) of 5% between the two modulation schemes was determined. The average sensitivity margin of n/4 DQPSK modulation to the enhanced modulation scheme of the present embodiment at 5% BER/$\overline{\text{MER}}$ over all logical channels was found to be around $4.5 \pm {}^{+}/\text{- }0.4$ dB and appeared to be quite consistent over all the different scenarios simulated.

Simulations were also carried out to assess the interference performance of the enhanced data rate modulation scheme of the present embodiment. The analysis performed was a C/I interference simulation. Two propagation channel models were used, the normal TU 50 C/I configuration in which the main and on-channel interference paths are faded according to a TU 50 model, and a "static" C/I configuration in which no fading was applied to the wanted or interferer signals. In both cases, the simulations were run under interference limited SNR conditions (35 dB) and the C/I ratio was varied in order to investigate MER/BER.

The simulation was carried out for the enhanced data rate modulation scheme for the TCH 11.5 (uncoded (unprotected)) and the AACH (Reed-Muller coded (protected)) logical channels under static co-channel interference conditions and under TU 50 co-channel interference conditions. The TU 50 propagation channel conditions were at a carrier to noise ratio of 35 dB. Similar analysis was carried out for a protected SCHF-H logical channel, in static co-channel interference conditions and in TU 50 co-channel interference conditions.

The interference simulation results showed that the margin required to meet the same C/I limit as in existing TETRA n/4 DQPSK modulation was around 7 dB for the enhanced data rate modulation scheme of the present embodiment. At 19 dB C/I, the SCHF-H logical channel message error rate was found to be greater than 20%, and a C/I of around 24 dB was required for 10% MER.

The simulation results show that for a number of logical channels and different propagation conditions, there is around a 4.5 dB margin in performance between the enhanced data rate modulation scheme of the present embodiment and the existing TETRA $\pi/4$ DQPSK modulation scheme. It was also found that an upper limit of 24 dB in C/I would probably be needed for a practical system. This level of performance is believed to be satisfactory and compatible with existing TETRA systems and requirements.

It can be seen from the above that the present invention permits an increase from the 36 kbps raw bit rate of existing TETRA to 54 kbps, but with the symbol rate, RRC filter, and channel spacing remaining the same as in existing TETRA. It therefore provides a method of enhancing the capacity of a TETRA mobile communications system by using a higher level modulation scheme in the existing TETRA communications channels to provide greater data rates.

Furthermore, because the proposed enhanced data rate modulation scheme is similar to existing TETRA $\pi/4$ DQPSK modulation, only minor changes to the modulator and demodulator for the enhanced data rate modulation scheme are required, thereby allowing, for example, relatively straightforward switching between existing TETRA n/4 DQPSK modulation and the enhanced modulation method of the present invention, and a high degree of backward compatibility and flexibility over modes of operation.

Furthermore, in its preferred embodiments at least, the peak:mean ratio for the modulation scheme of the present invention is not significantly worse than for existing TETRA, so the same transmitter can be used as in existing TETRA. The linearity requirements for the new modulation scheme are also not significantly different from the current n/4 DQPSK modulation used in TETRA.

It is therefore anticipated that modifications to existing TETRA equipment to support the new modulation scheme will be relatively minimal. The enhanced data rate scheme will therefore be relatively easy to implement in an existing TETRA system.

The enhanced data rate modulation scheme of the present invention is therefore a relatively low complexity enhancement to the current TETRA system, but which can still offer a 50% increase in raw bit rate in the existing 25 kHz TETRA channels.

It can therefore be used to provide higher data rates than standard existing TETRA in existing TETRA traffic channels, and using existing sites in the cellular network plan, while keeping the modifications to the standard TETRA system to provide the enhanced data rate relatively modest.

The present invention will therefore be advantageous, *inter alia,* where it is desired to upgrade the performance of an existing system and to manufacturers of TETRA systems that wish to keep investment in development and new equipment to a minimum.

**Claims**

1. A method of operating a TETRA mobile communications system, **characterised by** comprising:

    using a $\pi/8$ shifted differential 8-phase shift keying modulation scheme, which encodes 3 bits per symbol and has a $\pi/8$ phase rotation each symbol interval, for transmissions in the system.

2. The method of claim 1, further comprising using a Gray code mapping, in which each consecutive set of 3 bits is represented by a phase change of +/- $\pi/8$, +/- $3\pi/8$, +/- $5\pi/8$ and +/- $7\pi/8$.

3. The method of claim 1, or 2, wherein the modulation scheme is represented by:

$$S(k) = S(k-1)\exp[jD\Phi(k)]$$

$$S(0) = 1$$

where: S(k) is the kth symbol in the burst, k=1, 2, ..., n and n is the total number of symbols in a burst.

4. The method of claim 1, 2, or 3, wherein the phase change between consecutive symbols is related to the modulation bits as follows:

| B (3k-2) | B (3k-1) | B (3k) | D$\Phi$ (k) |
|---|---|---|---|
| 0 | 0 | 0 | $+\pi/8$ |
| 0 | 0 | 1 | $+3\pi/8$ |
| 1 | 0 | 1 | $+5\pi/8$ |
| 1 | 0 | 0 | $+7\pi/8$ |
| 0 | 1 | 0 | $-\pi/8$ |
| 0 | 1 | 1 | $-3\pi/8$ |
| 1 | 1 | 1 | $-5\pi/8$ |
| 1 | 1 | 0 | $-7\pi/8$ |

for k = 1, 2, ..., n.

5. The method of claim 1, 2, 3, or 4, further comprising using for the $\pi/8$ shifted differential 8-phase shift keying modulation scheme, the same symbol rate, RRC filter and channel spacing as is used for the TETRA $\pi/4$ DQPSK modulation scheme.

6. The method of any one of the preceding claims, further comprising using for the $\pi/8$ shifted differential 8-phase shift keying modulation scheme the channel, slot, and frame structure used for the TETRA $\pi/4$ DQPSK modulation scheme.

7. The method of any one of the preceding claims, further comprising also using the TETRA $\pi/4$ DQPSK modulation scheme for transmissions in the system, such that channels modulated with the TETRA $\pi/4$ DQPSK modulation scheme and with the $\pi/8$ shifted differential 8-phase shift keying modulation scheme will co-exist in the system.

8. The method of claim 7, comprising:

using the $\pi/8$ shifted differential 8-phase shift keying modulation scheme for transmissions in the system when a higher data transmission rate is desired; and
using the TETRA $\pi/4$ DQPSK modulation scheme for transmissions in the system when a lower data transmission rate is desired.

9. The method of claim 7 or 8, further comprising signalling on a $\pi/4$-DQPSK modulated channel an indication that a channel using the $\pi/8$ shifted differential 8-phase shift keying modulation scheme is available.

10. The method of claim 7, 8 or 9, further comprising using 25 kHz TETRA channels for both modulation schemes.

11. The method of claim 7, 8, 9 or 10, further comprising transmitting synchronisation bursts for initial synchronisation and frequency lock using the $\pi/4$ DQPSK modulation scheme.

12. The method of any one of the preceding claims, comprising transmitting an embedded training sequence to assist frame synchronisation for the $\pi/8$ shifted differential 8-phase shift keying modulation scheme.

13. An apparatus for a communications station of a TETRA mobile communications system, the apparatus being **characterised by** comprising:

means (3) for causing a TETRA communications station to make transmissions using a $\pi/8$ shifted differential 8-phase shift keying modulation scheme, which encodes 3 bits per symbol and has a $\pi/8$ phase rotation each symbol interval.

14. The apparatus of claim 13, further comprising means for using a Gray code mapping, in which each consecutive set of 3 bits is represented by a phase change of $^+/-$ $\pi/8$, $^+/-$ $3\pi/8$, $^+/-$ $5\pi/8$ and $^+/-$ $7\pi/8$.

15. The apparatus of claim 13 or 14, wherein the modulation scheme is represented by:

$$S(k) = S(k-1)\exp[jD\Phi(k)]$$

$$S(0) = 1$$

where: S(k) is the kth symbol in the burst, k=1, 2, ..., n and n is the total number of symbols in a burst.

16. The apparatus of claim 13, 14, or 15, wherein the phase change between consecutive symbols is related to the modulation bits as follows:

| B(3k-2) | B(3k-1) | B (3k) | D$\Phi$ (k) |
|---------|---------|--------|-------------|
| 0 | 0 | 0 | $+\pi/8$ |
| 0 | 0 | 1 | $+3\pi/8$ |
| 1 | 0 | 1 | $+5\pi/8$ |
| 1 | 0 | 0 | $+7\pi/8$ |
| 0 | 1 | 0 | $-\pi/8$ |
| 0 | 1 | 1 | $-3\pi/8$ |
| 1 | 1 | 1 | $-5\pi/8$ |
| 1 | 1 | 0 | $-7\pi/8$ |

for k = 1, 2, ..., n.

17. The apparatus of any one of claims 13 to 16, further comprising means (3) for causing a TETRA communications station to make transmissions using the TETRA $\pi/4$ DQPSK modulation scheme.

18. The apparatus of claim 17, comprising:

means for using the $\pi/8$ shifted differential 8-phase shift keying modulation scheme for transmissions in the system when a higher data transmission rate is desired; and
means for using the TETRA $\pi/4$ DQPSK modulation scheme for transmissions in the system when a lower data transmission rate is desired.

19. The apparatus of claim 17 or 18, further comprising means for signalling on a $\pi/4$-DQPSK modulated channel an indication that a channel using the $\pi/8$ shifted differential 8-phase shift keying modulation scheme is available.

20. The apparatus of claim 17, 18, or 19, further comprising means for transmitting synchronisation bursts for initial synchronisation and frequency lock using the $\pi/4$ DQPSK modulation scheme.

21. The apparatus of any one of claims 13 to 20, comprising means for transmitting an embedded training sequence to assist frame synchronisation for the $\pi/8$ shifted differential 8-phase shift keying modulation scheme.

**22.** A TETRA communications station comprising the apparatus of any one of claims 13 to 21.

**23.** A computer program comprising computer software code portions for performing the method of any one of claims 1 to 12 when the program is run on data processing means.

**Patentansprüche**

**1.** Verfahren zum Betrieb eines TETRA Mobilkommunikationssystems, das **dadurch gekennzeichnet ist, dass** es umfasst:

Verwendung eines um π/8 verschobenen 8-Phasendifferenzmodulationsschemas (engl.: differential 8-phase shift keying modulation scheme), das für Übertragungen in das System 3 Bits pro Zeichen kodiert und in jedem Zeichenintervall eine π/8 -Phasendrehung hat.

**2.** Verfahren nach Anspruch 1, das außerdem Verwendung einer Gray Code Abbildung umfasst, in der jeder aufeinanderfolgende Satz von 3 Bits durch einen Phasenwechsel von $\pm$ π/8, $\pm$ 3π/8, $\pm$ 5π/8 und $\pm$ 7π/8 dargestellt wird.

**3.** Verfahren nach Anspruch 1 oder 2, bei dem das Modulationsschema dargestellt wird durch:

$$S(k) = S(k-1)\exp[jD\Phi(k)]$$

$$S(0) = 1$$

worin S(k) das k-te Zeichen in der Signalfolge darstellt, k=1, 2, ..., n und n die Gesamtzahl der Zeichen in der Signalfolge darstellt.

**4.** Verfahren nach Anspruch 1, 2 oder 3, bei dem der Phasenwechsel zwischen aufeinanderfolgenden Zeichen zu den Modulationsbits wie folgt in Beziehung steht:

| B (3k-2) | B (3k-1) | B (3k) | $D\Phi(k)$ |
|----------|----------|--------|------------|
| 0 | 0 | 0 | + π/8 |
| 0 | 0 | 1 | + 3π/8 |
| 1 | 0 | 1 | + 5π/8 |
| 1 | 0 | 0 | + 7π/8 |
| 0 | 1 | 0 | - π/8 |
| 0 | 1 | 1 | - π/8 |
| 1 | 1 | 1 | - 5π/8 |
| 1 | 1 | 0 | - 7π/8 |

für k = 1, 2, ..., n.

**5.** Verfahren nach Anspruch 1, 2, 3 oder 4, das außerdem für das um π/8 verschobene 8-Phasendifferenzmodulationsschema die Verwendung derselben Zeichenübertragungsrate, desselben RRC-Filters und desselben Kanalabstands umfasst, wie für das TETRA π/4 DQPSK Modulationsschema verwendet werden.

**6.** Verfahren nach einem der voranstehenden Ansprüche, das außerdem für das um π/8 verschobene 8-Phasendifferenzmodulationsschema die Verwendung des Kanals, des Slots und der Rahmenstruktur umfasst, die für das TETRA π/4 DQPSK Modulationsschema verwendet werden.

7. Verfahren nach einem der voranstehenden Ansprüche, das ferner auch die Verwendung des TETRA π/4 DQPSK Modulationsschemas für Übertragungen in das System umfasst, in der Art, dass mit dem TETRA π/4 DQPSK Modulationsschema modulierte Kanäle und mit dem um π/8 verschobenen 8-Phasendifferenzmodulationsschema modulierte Kanäle nebeneinander in dem System existieren.

8. Verfahren nach Anspruch 7, mit Verwendung des um π/8 verschobenen 8-Phasendifferenzmodulationsschemas für Übertragungen in das System, wenn eine höhere Datenübertragungsrate gewünscht ist, und Verwendung des TETRA π/4 DQPSK Modulationsschemas für Übertragungen in das System, wenn eine niedrigere Datenübertragungsrate gewünscht ist.

9. Verfahren nach Anspruch 7 oder 8, das ferner das Anzeigen einer Anzeige auf einem π/4 - DQPSK modulierten Kanal umfasst, dass ein das um π/8 verschobene 8-Phasendifferenzmodulationsschema verwendender Kanal verfügbar ist.

10. Verfahren nach Anspruch 7, 8 oder 9, das ferner eine Verwendung von 25 kHz TETRA Kanälen für beide Modulationsschemata umfasst.

11. Verfahren nach Anspruch 7, 8, 9 oder 10, das ferner eine Übertragung von Synchronisationssignalfolgen zur anfänglichen Synchronisation und eine das π/4 DQPSK Modulationsschema verwendende Frequenzsperre umfasst.

12. Verfahren nach einem der voranstehenden Ansprüche, das eine Übertragung einer eingebetteten Trainingssequenz umfasst, um die Rahmensynchronisation für das um π/8 verschobene 8-Phasendifferenzmodulationsschema zu unterstützen.

13. Vorrichtung für eine Kommunikationsstation eines TETRA Mobilkommunikationssystems, wobei die Vorrichtung charakterisiert ist durch
Mittel (3), um eine TETRA Kommunikationsstation zu veranlassen, Übertragungen unter Verwendung eines um π/8 verschobenen 8-Phasendifferenzmodulationsschemas durchzuführen, das 3 Bits pro Zeichen kodiert und in jedem Zeichenintervall eine π/8 Phasendrehung hat.

14. Vorrichtung nach Anspruch 13, die ferner Mittel zur Verwendung einer Gray Code Abbildung umfasst, bei der jeder aufeinanderfolgende Satz von 3 Bits durch einen Phasenwechsel von $\pm\pi/8$ , $\pm 3\pi/8$ , $\pm 5\pi/8$ und $\pm 7\pi/8$ dargestellt wird.

15. Vorrichtung nach Anspruch 13 oder 14, bei der das Modulationsschema dargestellt wird durch:

$$S(k) = S(k-1)\exp\left[jD\Phi(k)\right]$$

$$S(0) = 1$$

worin S(k) das k-te Zeichen der Signalfolge, k=1, 2, ..., n und n die Gesamtzahl der Zeichen in der Signalfolge darstellt.

16. Vorrichtung nach Anspruch 13, 14 oder 15, bei der der Phasenwechsel zwischen aufeinanderfolgenden Zeichen zu den Modulationsbits wie folgt in Beziehung steht:

| B (3k-2) | B(3k-1) | B (3k) | $D\Phi(k)$ |
|---|---|---|---|
| 0 | 0 | 0 | + π/8 |
| 0 | 0 | 1 | + 3π/8 |
| 1 | 0 | 1 | + 5π/8 |

(fortgesetzt)

| B (3k-2) | B(3k-1) | B (3k) | $D\Phi(k)$ |
|----------|---------|--------|------------|
| 1 | 0 | 0 | $+ 7\pi/8$ |
| 0 | 1 | 0 | $- \pi/s$ |
| 0 | 1 | 1 | $- 3\pi/8$ |
| 1 | 1 | 1 | $- 5\pi/8$ |
| 1 | 1 | 0 | $- 7\pi/8$ |

für k = 1, 2, ..., n.

**17.** Vorrichtung nach einem der Ansprüche 13 bis 16, die ferner Mittel (3) umfasst, um eine TETRA Kommunikationsstation zu veranlassen, Übertragungen unter Verwendung des TETRA $\pi/4$ DQPSK Modulationsschemas durchzu-führen.

**18.** Vorrichtung nach Anspruch 17 mit
Mitteln zur Verwendung des um $\pi/8$ verschobenen 8-Phasendifferenzmodulationsschemas für Übertragungen in das System, wenn eine höhere Datenübertragungsrate gewünscht ist, und
Mitteln zur Verwendung des TETRA $\pi/4$ DQPSK Modulationsschemas für Übertragungen in das System, wenn eine niedrigere Datenübertragungsrate gewünscht ist.

**19.** Vorrichtung nach Anspruch 17 oder 18, die ferner Mittel umfasst, um auf einem $\pi/4$-DQPSK modulierten Kanal eine Anzeige anzuzeigen, dass ein das um $\pi/8$ verschobene 8-Phasendifferenzmodulationsschema verwendender Kanal verfügbar ist.

**20.** Vorrichtung nach Anspruch 17, 18 oder 19, die ferner Mittel zur Übertragung von Synchronisationssignalfolgen zur anfänglichen Synchronisation und eine das $\pi/4$ DQPSK Modulationsschema verwendende Frequenzsperre umfasst.

**21.** Vorrichtung nach einem der Ansprüche 13 bis 20, mit Mitteln zur Übertragung einer eingebetteten Trainingssequenz, um die Rahmensynchronisation für das um $\pi/8$ verschobene 8-Phasendifferenzmodulationsschema zu unterstützen.

**22.** TETRA Kommunikationsstation mit der Vorrichtung nach einem der Ansprüche 13 bis 21.

**23.** Computerprogramm mit Teilen eines Computersoftwarecodes zum Ausführen des Verfahrens nach einem der Ansprüche 1 bis 12, wenn das Programm auf datenverarbeitenden Mitteln ausgeführt wird.

**Revendications**

**1.** Procédé consistant à mettre en fonctionnement un système de communication mobile TRETRA, **caractérisé par le fait qu'**il comprend :

l'utilisation d'un schéma de modulation à modulation par déplacement de phase à 8 phases différentiel déplacé de $\pi/8$, qui code 3 bits par symbole et a une rotation de phase de $\pi/8$ à chaque intervalle de symbole, pour des transmissions dans le système.

**2.** Procédé selon la revendication 1, comprenant en outre l'utilisation d'un mappage en code de Gray, dans lequel chaque ensemble consécutif de 3 bits est représenté par un déplacement de phase de +/- $\pi/8$, +/- $3\pi/8$, +/- $5\pi/8$ et +/- $7\pi/8$.

**3.** Procédé selon la revendication 1 ou 2, dans lequel le schéma de modulation est représenté par :

$$S(k) = S(k-1)\exp[jD\Phi(k)]$$

$$S(0) = 1$$

où : S(k) est le kième symbole dans la salve, k = 1,
2, ..., n et n est le nombre total de symboles dans une salve.

4. Procédé selon la revendication 1, 2 ou 3, dans lequel le déplacement de phase entre des symboles consécutifs est associé aux bits de modulation de la manière suivante :

| B(3k-2) | B(3k-1) | B(3k) | DΦ(k) |
|---------|---------|-------|--------|
| 0 | 0 | 0 | +π/8 |
| 0 | 0 | 1 | +3π/8 |
| 1 | 0 | 1 | +5π/8 |
| 1 | 0 | 0 | +7π/8 |
| 0 | 1 | 0 | -π/8 |
| 0 | 1 | 1 | -3π/8 |
| 1 | 1 | 1 | -5π/8 |
| 1 | 1 | 0 | -7π/8 |

pour k = 1, 2, ..., n.

5. Procédé selon la revendication 1, 2, 3 ou 4, comprenant en outre l'utilisation pour le schéma de modulation à modulation par déplacement de phase à 8 phases différentiel déplacé de π/8, des mêmes débit de symboles, filtre RRC et espacement entre canaux que ceux utilisés pour le schéma de modulation DQPSK à π/4 TETRA.

6. Procédé selon l'une quelconque des revendications précédentes, comprenant en outre l'utilisation pour le schéma de modulation à modulation par déplacement de phase à 8 phases différentiel déplacé de π/8, du canal, de l'intervalle de temps, et de la structure de trame utilisés pour le schéma de modulation DQPSK à π/4 TETRA.

7. Procédé selon l'une quelconque des revendications précédentes, comprenant en outre également l'utilisation du schéma de modulation DQPSK à π/4 TETRA pour des transmissions dans le système, de sorte que des canaux modulés à l'aide du schéma de modulation DQPSK à π/4 TETRA et à l'aide du schéma de modulation à modulation par déplacement de phase à 8 phases différentiel déplacé de π/8 vont coexister dans le système.

8. Procédé selon la revendication 7, comprenant :

l'utilisation du schéma de modulation à modulation par déplacement de phase à 8 phases différentiel déplacé de π/8 pour des transmissions dans le système lorsqu'une vitesse de transmission de données supérieure est voulue ; et
l'utilisation du schéma de modulation DQPSK à π/4 TETRA pour des transmissions dans le système lorsqu'une vitesse de transmission de données inférieure est voulue.

9. Procédé selon la revendication 7 ou 8, comprenant en outre la signalisation sur un canal modulé DQPSK à π/4 d'une indication qu'un canal utilisant le schéma de modulation à modulation par déplacement de phase à 8 phases différentiel déplacé de π/8 est disponible.

10. Procédé selon la revendication 7, 8 ou 9, comprenant en outre l'utilisation de canaux TETRA de 25 khz pour les deux schémas de modulation.

11. Procédé selon la revendication 7, 8, 9 ou 10, comprenant en outre la transmission de salves de synchronisation pour une synchronisation initiale et un verrouillage de fréquence en utilisant le schéma de modulation DQPSK à π/4.

12. Procédé selon l'une quelconque des revendications précédentes, comprenant la transmission d'une séquence d'apprentissage intégrée pour assister une synchronisation de trame pour le schéma de modulation à modulation par déplacement de phase à 8 phases différentiel déplacé de π/8.

**13.** Dispositif pour une station de communication d'un système de communication mobile TETRA, le dispositif étant **caractérisé par le fait qu'**il comprend:

des moyens (3) pour amener une station de communication TETRA à effectuer des transmissions en utilisant un schéma de modulation à modulation par déplacement de phase à 8 phases différentiel déplacé de π/8, qui code 3 bits par symbole et a une rotation de phase de π/8 à chaque intervalle de symbole.

**14.** Dispositif selon la revendication 13, comprenant en outre des moyens pour utiliser un mappage en code de Gray, dans lequel chaque ensemble consécutif de 3 bits est représenté par un déplacement de phase de +/- π/8, +/- 3π/8, +/- 5π/8 et +/- 7π/8.

**15.** Dispositif selon la revendication 13 ou 14, dans lequel le schéma de modulation est représenté par :

$$S(k) = S(k-1)\exp[jD\Phi(k)]$$

$$S(0) = 1$$

où : S(k) est le kième symbole dans la salve, k = 1, 2, ..., n et n est le nombre total de symboles dans une salve.

**16.** Dispositif selon la revendication 13, 14 ou 15, dans lequel le déplacement de phase entre des symboles consécutifs est associé aux bits de modulation de la manière suivante :

| B (3k-2) | B(3k-1) | B (3k) | DΦ(k) |
|----------|---------|--------|-------|
| 0 | 0 | 0 | +π/8 |
| 0 | 0 | 1 | +3π/8 |
| 1 | 0 | 1 | +5π/8 |
| 1 | 0 | 0 | +7π/8 |
| 0 | 1 | 0 | -π/8 |
| 0 | 1 | 1 | -3π/8 |
| 1 | 1 | 1 | -5π/8 |
| 1 | 1 | 0 | -7π/8 |

pour k = 1, 2, ..., n.

**17.** Dispositif selon l'une quelconque des revendications 13 à 16, comprenant en outre des moyens (3) pour amener une station de communication TETRA à effectuer des transmissions en utilisant le schéma de modulation DQPSK à π/4 TETRA.

**18.** Dispositif selon la revendication 17, comprenant:

des moyens pour utiliser le schéma de modulation à modulation par déplacement de phase à 8 phases différentiel déplacé de π/8 pour des transmissions dans le système lorsqu'une vitesse de transmission de données supérieure est voulue,
des moyens pour utiliser le schéma de modulation DQPSK à π/4 TETRA pour des transmissions dans le système lorsqu'une vitesse de transmission de données inférieure est voulue.

**19.** Dispositif selon la revendication 17 ou 18, comprenant en outre des moyens pour la signalisation sur un canal modulé DQPSK à π/4 d'une indication qu'un canal utilisant le schéma de modulation à modulation par déplacement de phase à 8 phases différentiel déplacé de π/8 est disponible.

**20.** Dispositif selon la revendication 17, 18, ou 19, comprenant en outre des moyens pour transmettre des salves de synchronisation pour une synchronisation initiale et un verrouillage de fréquence en utilisant le schéma de modulation DQPSK à π/4.

**21.** Dispositif selon l'une quelconque des revendications 13 à 20, comprenant des moyens pour transmettre une séquence d'apprentissage intégrée pour assister une synchronisation de trame pour le schéma de modulation à modulation par déplacement de phase à 8 phases différentiel déplacé de π/8.

**22.** Station de communications TETRA comprenant le dispositif selon l'une quelconque des revendications 13 à 21.

**23.** Programme informatique comprenant des parties de code logiciel informatique pour mettre en oeuvre le procédé selon l'une quelconque des revendications 1 à 12 lorsque le programme s'exécute sur des moyens de traitement de données.

# FIG. 1
Constellation Diagram

Modulator / Transmitter Structure

| 1 | 2 | 3 | 4 | 5 | 6 | 7 |
|---|---|---|---|---|---|---|
| Bit Source | Burst Multiplex | Differential Encoder | Upsampler | Baseband Filter | D/A Converter | RF Transmitter |

Propagation Channel ≈

Demodulator / Receiver Structure

| 16 | 15 | 14 | 13 | 12 | 11 | 10 | 9 | 8 |
|---|---|---|---|---|---|---|---|---|
| Bit Sink | Burst Demux | Frame Sync. | Symbol Demapper | Differential Demodulator | Down-sampler | Baseband Filter | A/D Converter | RF Receiver |

D8PSK

π/4 DQPSK

FIG. 2

255 Symbols / 765 bits / 14.2ms

| Ramp / Linerise (24 bits) | Phase (3 bits) | Packed Data (345 bits) | Broadcast Block (15 bits) | Training Sequence (21 bits) | Broadcast Block (15 bits) | Packed Data (345 bits) | Phase (3 bits) | Ramp Down (9 bits) |

Discontinuous Downlink Burst

255 Symbols / 765 bits / 14.2ms

| Ramp / Linerise (24 bits) | Phase (3 bits) | Packed Data (345 bits) | Training Sequence (21 bits) | Packed Data (345 bits) | Phase (3 bits) | Ramp Down (24 bits) |

Discontinuous Uplink Burst

# FIG. 3

Example Burst Structures

EP 1 400 082 B1

(440 bits)

```
(456, 44)
Block code
4 tail bits
```

(460 bits)

```
RGPC code
i = 2/3
```

(690 bits)

```
(690, 103)
Block
interleave
```

(690 bits)

```
Scrambling
```

# FIG. 4

SCHF-H Logical Channel Structure